# EUROPÄISCHE PATENTANMELDUNG

(11) **EP 1 329 690 A1**
(43) Veröffentlichungstag der Anmeldung: **23.07.2003**
(21) Anmeldenummer: 02001487.4
(22) Anmeldetag: 22.01.2002
(51) Int. Cl.: G01C 15/00

(54) **Verfahren und Vorrichtung zum automatischen Auffinden von Zielmarken**

(71) Anmelder: Leica Geosystems AG, 9435 Heerbrugg (CH)
(72) Erfinder: Benz, Paul, 9444 Diepoldsau (CH); Geser, Markus, 9403 Goldach (CH); Graf, Roland, 9033 Untereggen (CH); Pfiffner, Bruno, 8893 Hochwiese (CH); Bürki, Marcel, 9434 Au (CH); Landert, Marco, 9042 Speicher (CH); Hammerer, Markus, 6833 Fraxern (AT); Hinderling, Jürg, 9437 Marbach (CH); Hanns, Günther, 9443 Widnau (CH); Bayer, Gerhard, 88131 Lindau (DE)
(74) Vertreter: Büchel, Kurt F.

(57) **Zusammenfassung**

Bei geodätischen Vermessungssystemen und Messgeräten (14) besteht das Bedürfnis, anzumessende Zielpunkte, die mit einer Zielmarke (Retroreflektor) (2a) versehen sind, schnell und automatisiert aufzufinden und zu erfassen.

Zur schnellen Erfassung, Identifizierung und Festlegung des Horizontalwinkels einer solchen Zielmarke, auch auf grössere Distanzen, wird durch eine Sendeeinheit (1) elektromagnetische Strahlung in Form eines vertikalen Fächers (17) ausgesandt, dessen Strahlung nach Reflektion an der Zielmarke von einer Empfangseinheit mit einem Gesichtfeld in Form eines vertikalen Fächers empfangen wird. Durch eine Analyse der Signalstärke und der scheinbaren Objektgrösse können eine Plausibilitätsprüfung und eine sichere Unterdrückung von Fremd- oder Störzielen bewirkt werden.

Eine solche Zielsuchvorrichtung zeichnet sich durch eine selektive Analyse von spezifischen Merkmalen eines erfassten Zielobjektes aus. Aufgrund der Plausibilitätsprüfung ist ein schnelles, sicheres und robustes Auffinden von Zielmarken möglich.

## Beschreibung

Die Erfindung betrifft ein Verfahren zum automatischen Auffinden einer Zielmarke nach dem Oberbegriff des Anspruchs 1, eine Vorrichtung nach dem Oberbegriff des Anspruchs 12, eine Empfangseinheit nach dem Oberbegriff des Anspruchs 20, ein geodätisches Messgerät nach dem Oberbegriff des Anspruchs 24 und geodätische Vermessungssysteme nach Anspruch 26 oder 27.

Seit langem besteht in Zusammenhang mit geodätischen Vermessungen das Bedürfnis, im Gelände befindliche und zu vermessende geodätische Zielmarken automatisch zu erkennen und möglichst auch gleichzeitig grob zu vermessen. Diese Notwendigkeit wird durch die Tendenz zu vollautomatischen und integrierten Vermessungssystemen noch verstärkt.

Optoelektronische Vorrichtungen zur automatischen Auffindung und Lokalisierung von geodätischen Zielmarken, beispielsweise eines Retroreflektors oder einer Reflexfolie, werden dementsprechend bereits in verschiedenen Ausgestaltungsformen verwendet. Vorrichtungen dieses Typs ergänzen dabei die bei geodätischen Vermessungsaufgaben gebräuchlichen sensorischen Messmittel, insbesondere erbringt die Kombination mit einem motorisierten Theodoliten mit automatischer Zielerfassung erhebliche Vorteile.

Vorrichtungen zum Auffinden von Zielmarken und damit auch die Erfindung betreffen dabei im weiteren Sinn alle Messgeräte, die durch direkt vom Menschen zu handhabende Richtmittel auf Messpunkte optisch ausgerichtet werden. Unter dem Begriff "geodätisches Messgerät" soll in diesem Zusammenhang verallgemeinernd stets ein Messinstrument verstanden werden, das über Vorrichtungen zur Messung oder Überprüfung von Daten mit räumlichem Bezug verfügt oder auch zur Ausrichtung dient. Insbesondere betrifft dies die Messung von Entfernung und/oder Richtung bzw. den Winkeln zu einem Bezugs- oder Messpunkt. Darüber hinaus können jedoch noch weitere Vorrichtungen, z.B. Komponenten zur satellitengestützten Ortsbestimmung (bspw. GPS oder GLONASS), vorhanden sein, die für erfindungsgemässe Messungen verwendet werden können. Insbesondere sollen hier unter einem geodätischen Messgerät Theodoliten, Nivelliere oder auch sogenannte Totalstationen als Tachymeter mit elektronischer Winkelmessung und elektrooptischem Entfernungsmesser verstanden werden. Gleichermassen ist die Erfindung zur Verwendung in spezialisierten Vorrichtungen mit ähnlicher Funktionalität geeignet, z.B. in militärischen Richtkreisen oder in der industriellen Bauwerks- oder Prozessüberwachung, diese Systeme werden hiermit ebenfalls unter dem Begriff "geodätisches Messgerät" erfasst.

Die heute gebräuchlichen, automatisierten Theodoliten, als ein Beispiel für ein geodätisches Messgerät, sind nicht nur mit Winkel- und Distanzsensoren sondern auch mit einer optoelektronischen Zielsuch-, Positionierungs- und Zielpunktvermessungsvorrichtung, im folgenden Automatische Zielerfassungseinheit (AZE) genannt, bestückt. Solche Theodolite sind in der Lage, den Zielpunkt automatisch anzufahren und die Raumkoordinaten zu vermessen. Im Fall einwandfreier Funktion ist die Zeitersparnis mit solchen automatisierten Instrumenten erheblich. Ist das System zudem über Fernbedienung, beispielsweise vom Zielpunkt aus als Ein-Mann-Station bedienbar, so ist die Arbeitsleistung und die damit erzielte Kostenersparnis noch ausgeprägter.

Ein wesentlicher Bestandteil dieser automatisierten Vermessungs-Instrumente ist die AZE. Bekannt sind diverse Lösungen wie CCD- oder CMOS-Kameras mit Bildverarbeitung, optoelektronische positionssensitive Halbleiterdetektoren (PSD), 4 Quadranten-Dioden, akustooptische Strahlscanner usw.

Zur Hauptfunktion dieser AZE gehört die exakte Vermessung einer Zielmarke oder eines Reflektors mit mm-Genauigkeit bei kurzen und langen Distanzen, wobei Distanzen über 1000m ebenfalls vermessen werden können. Um diese mm-Genauigkeit zu erreichen, haben diese Suchvorrichtungen durchwegs den Nachteil eines eingeschränkten Sensor-Gesichtsfelds. Nur bei kleinen bis mittleren Gesichtsfeldern von wenigen Grad lassen sich Punktgenauigkeiten von <5mm bei 1000m erreichen.

Ein wesentlicher Nachteil eines kleinen Sensor-Gesichtsfelds ist die erschwerte Zielsuche, da sich die zu vermessende Zielmarke zu Beginn einer Messung oft ausserhalb des Gesichtsfelds befindet. Bei vielen Anwendungen, insbesondere im Kurzdistanzbereich, mit welchem ein weitwinkliges Arbeitsfeld einhergeht, besitzt ein ausgedehntes Sensor-Gesichtsfeld Vorteile.

Heute kommen bei der Zielsuche grundsätzlich 2 Methoden zum Einsatz. Bei der einen Methode sucht der Sensor nach einem programmierten Algorithmus oder Verfahren das Ziel selbständig, dies braucht aber Zeit wegen des kleinen Gesichtsfelds, bei der zweiten Methode wird das Suchfeld durch den Benutzer definiert, sodass die Zielobjektsuche gerichteter und mit geringerem Zeitaufwand abläuft, dies hat aber den Nachteil, dass die Suchfeldkonfiguration bei jedem Standortwechsel neu programmiert werden muss.

Ein weiterer Nachteil existiert bei der Verfolgung von bewegten Zielobjekten. Bei zu raschen oder ruckartigen tangentialen Bewegungen zur Zielrichtung des automatisierten Theodolits kann es vorkommen, dass die Zielmarke aus dem Gesichtsfeld der Zieldetektionsvorrichtung herausfährt. Ein auch nur kurzzeitiger Zielverlust kann dabei den effizienten Verfolgungsprozess stören.

Weitere Mängel bei Vorrichtungen mit AZE des Stands der Technik sind darüber hinaus die fehlende Robustheit bei (Eigen-)Reflexen an Fremdzielen und eine fehlende bzw. nicht hinreichend sichere Zielerkennung. Fremdziele sind solche mit hohem Reflexionsgrad, wie z.B. Verkehrstafeln. Bei der Zielerkennung ist die Identifikation der zu vermessenden Zielmarke bisher nicht zufriedenstellend gelöst, da insbesondere die fehlende Robustheit bei Sonnenreflexen an Gegenständen mit glänzender Oberfläche nachteilig wirkt.

Zwar können Sonnenreflexe an Gegenständen mit modernen Vorrichtungen erkannt werden, jedoch braucht die hierfür notwendige Analyse Zeit, wodurch der Suchprozess bei jedem Reflex abgebremst wird.

Bei Grobsuchsensoren des Stands der Technik entsteht aufgrund des kleinen Sensor-Gesichtsfelds ein zu grosser Zeitbedarf bei der Grobzielsuche. Das kleine Gesichtsfeld wirkt sich dabei überproportional aus, erstens besitzt dieses einen kleineren Abdeckungsbereich der Umgebung, so dass das Abfahren des Suchbereichs einen längeren Zeitraum erfordert. Zweitens muss das Abfahren mit einer geringeren Scan-Geschwindigkeit wegen kurzer Verweildauer des Objekts im Gesichtsfeld erfolgen. Eine fächerartige Gestaltung des Erfassungsbereichs der Sensoren ist diesbezüglich bereits besser geeignet, jedoch sind die Gesichtsfelder, gebildet durch Fächerwinkel von typischerweise 1 bis 5 Grad, nach wie vor viel zu klein.

Aus der Patentschrift CH 676 042 ist eine Vorrichtung mit fächerartigem Sender und Empfänger bekannt, welche in einem drehbaren Messkopf untergebracht ist. Von der Sendeeinheit werden Lichtimpulse in einem Lichtfächer ausgesendet, die reflektierten Impulse werden hinsichtlich Winkelinformation entsprechend ausgewertet. Diese Vorrichtung hat jedoch den erheblichen Nachteil, nicht nur die zu vermessenden Zielobjekte sondern auch fremde, störende Objekte anzufahren. Solche Objekte sind unter anderem optisch reflektierende Gegenstände, wie Schaufenster oder Verkehrstafeln, aber auch gespiegeltes Sonnenlicht an Motorfahrzeugen.

Eine Weiterführung der obigen Zielsuchvorrichtung zur groben Bestimmung der Zielkoordinaten ist in CH676041 beschrieben. Dabei erfolgt eine Kombination mit einer optoelektronischen Vorrichtung zur Feinmessung. Die eigentliche Zielsuchvorrichtung spannt zwei senkrecht aufeinander stehende Fächer auf, mit denen die Lage des Zielpunktes zweidimensional grob vermessen wird, die anschliessende Feinvermessung mit der zweiten Vorrichtung kann dann ohne Zielsuchvorgang durchgeführt werden. Der Nachteil dieser Kombination ist ebenfalls die fehlende Robustheit bezüglich eines fehlerhaften Einlockens auf Fremdobjekte.

Eine weitere Vorrichtung ist aus der Schrift US 6,046,800 bekannt. Geoffenbart wird ein motorisierter Theodolit, der mit einem Sensor zur Erfassung der Zielpunktkoordinaten bestückt ist, bestehend aus einem oder zwei fächerartigen Sendebündeln und zwei optischen Empfangskanälen. Eine Besonderheit dieser Vorrichtung besteht darin, dass die optischen Achsen des Sendekanals und der beiden Empfänger triaxial in einer Ebene liegen, dies ermöglicht bei einer Schwenk- oder Suchbewegung des Theodolits die Unterscheidung von normal reflektierenden und retroreflektierenden Objekten durch Auswertung der zeitlichen Abfolge der beiden Empfangssignale. Diese Methode der empfängerseitigen Pupillenteilung hat aber den Nachteil, dass dieses Unterscheidungsmerkmal nur bei kurzen Distanzen existiert, zudem ist die Vorrichtung wegen den beiden Empfangskanälen aufwendig bzw. teuer.

Aus der Schrift DE 196 23 060 ist ebenfalls ein geodätisches Gerät zur Grobzielsuche bekannt. Diese Vorrichtung besteht aus einem optoelektronischen, im wesentlichen als Scanner ausgebildeten Vertikalwinkelsucher. Sende- und Empfangsstrahl werden dabei um eine (zweite) horizontal liegende motorisch angetriebene Achse rotiert. Beabsichtigt wird eine grosse Reichweite, die aufgrund der parallel kollimierten optischen Bündel erreicht wird, diese Eigenschaft wird jedoch mit dem Nachteil der punktartigen und damit sequentiellen und zeitaufwendigen Raumabtastung erkauft. Beim Suchvorgang wird der rasch vertikal rotierende Sensorstrahl gleichzeitig langsam in horizontaler Richtung bewegt. Ein weiterer Nachteil ist der Bedarf eines zusätzlichen Winkelmesssystems an der Scannerachse zur Grobbestimmung des Vertikalwinkels. Würde der Raum hingegen mit einem fächerartigen optischen Messbündel abgesucht, so wäre lediglich eine eindimensionale Drehbewegung um eine Achse notwenig.

Ein wesentlicher Nachteil aller bisher bekannten Vorrichtungen ist die ungenügende Robustheit gegen stark reflektierende Fremdobjekte, die versehentlich als Zielobjekt interpretiert werden, wie auch Störung oder zumindest Verzögerung des Suchvorgangs durch starkes Sonnenlicht oder Sonnereflexe.

In den meisten Fällen wird der Suchvorgang manuell über Sprechfunk oder Datenfunk unterstützt. Bei der im Dokument DE 197 334 91 beschriebenen Vorrichtung wird mittels einer zusätzlichen am Zielobjekt angebrachten optischen Empfangseinheit geprüft, ob der Suchstrahl des Theodoliten das Zielobjekt trifft. Wird ein entsprechendes Suchsignal empfangen, so meldet das Zielobjekt über Datenfunk seine Identifikation an den Theodoliten. Diese Lösung ist zwar robust, beeinträchtigt aber die Ergonomie am Zielobjekt.

Die Aufgaben der vorliegenden Erfindung bestehen in einer Verbesserung der eingangs definierten Sensoreinrichtungen.

Dabei besteht eine Aufgabe darin, ein geodätisches Messgerät zur Grobzielsuche bereitzustellen, das in Hinblick auf eine möglichst schnelle Lokalisierung und Identifikation von Zielobjekten und deren Ermittlung der Grobkoordinaten geeignet ist und das eine verkürzte Suchzeit bei einer Reichweite von bis zu 1000m besitzt. Die Geschwindigkeit der Zielsuche stellt ein Hauptproblem dar, da diese nach einem grossen Sensorgesichtsfeld verlangt, das durch einen entsprechend grossen Fächerwinkel erreicht wird. Mit grösser werdendem Fächerwinkel nimmt jedoch die Reichweite ab. Es ist daher die Aufgabe der Erfindung den Reichweitenbereich von geodätischen Applikationen und gleichzeitig eine hohe Suchgeschwindigkeit zu erreichen.

Eine weitere Aufgabe besteht in Ermöglichung eines Suchvorgangs, der gegenüber Fremdlicht und Eigenreflexe an Fremdzielen robust ist. Der Suchvorgang darf dabei nicht durch Fremdziele mit hohem Reflexionsgrad oder durch Gegenstände mit Sonnenreflex zeitlich verzögert oder unterbrochen werden. Dabei umfasst die Aufgabe die simultane Identifikation der zu vermessenden Zielobjekte anhand geeigneter Identifikations-Merkmale auch während des Suchlaufs.

Diese Aufgaben werden erfindungsgemäss durch die kennzeichnenden Merkmale der Ansprüche 1 bzw. 12 sowie durch die kennzeichnenden Merkmale der Unteransprüche gelöst. Eine Empfangseinheit, ein geodätisches Messgerät und geodätische Vermessungssysteme ergeben sich aus den Ansprüchen 20, 24, 26, 27 bzw. 28.

Die vorliegende Erfindung betrifft im wesentlichen eine optoelektronische Zielsuchvorrichtung bestehend aus einem fächerartigen Sendekanal, welcher das zu lokalisierende Ziel bestrahlt, einem fächerartigen Empfangskanal, welcher das vom Zielobjekt reflektierte Licht empfängt, einem motorisierten Messgerät, beispielsweise einem Theodoliten, welches sich um eine der beiden Achsen während dem Suchlauf bewegt, mindestens einer elektronischen Auswerteeinheit zur Bestimmung der groben Zielpunktlage, Signalstärke des reflektierten Signals, der Ausdehnung des Zielobjekts in Scanrichtung, und der Distanz zum Zielobjekt. Optional kann auch die Dauer des reflektierten optischen Signals erfasst werden.

Sowohl die Ebenen der beiden optoelektronischen Lichtfächer als auch die Drehachse des Theodolits (=Scanachse für den Suchlauf) sind parallel zueinander orientiert. Im folgenden sollen die Begriffe der horizontalen und vertikalen Bewegung so verstanden werden, dass bei einer Bewegung stets eine entsprechende Komponente und eine dementsprechende Bewegung vorhanden sind. Eine horizontale Bewegung der Sendeeinheit kann somit insbesondere auch durch eine gegenüber dem Horizont geneigte Bewegung erreicht werden.

Ein leistungsstarker und sensorisch empfindlicher Laufzeitmesser dient als Zielsuchvorrichtung. Geeignete Laufzeitmesser mit Impulsmodulation haben grosse Reichweite und kurze Messzeit. Die erreichbaren optischen Sendeleistungen mit den lediglich nur Millimeter grossen Pulslaserdioden liegen dabei über 100 Watt. Dadurch lassen sich auch bei fächerartiger Aufweitung des Sendestrahls die geforderten Reichweiten für geodätische Applikationen realisieren. Während eines Suchlaufs wird der Laufzeitmesser im Dauermessmodus betrieben. Dabei emittiert der Sender optische Impulse mit einer Rate im kHz-Bereich. Da die Vorrichtung im Einzelschussauswerteverfahren betrieben wird, sind Informationen über die gescannte Umgebung im Nanosekunden- bis Mikrosekundenbereich vorhanden. Die empfangenen Impulse werden mit einem schnellen AD-Wandler abgetastet, wodurch ein Intensitätsbild der Umgebung entsteht. Dabei können die abgetasteten Impulse beispielsweise in einem 2D-Speicher abgelegt und nachfolgend ausgewertet werden oder aber es erfolgt zeitnah eine erste Analyse und die weitere Auswertung basiert auf diesen ersten Ergebnissen, die z.B. eine Anhäufung oder ein Zusammenzug der Impulse sein können.

Die Dimensionierung des optischen Sende-Fächers ist so bemessen, dass dieser die typischerweise zu vermessende Umgebung in vertikaler Richtung abdeckt. Die Divergenz in senkrechter Richtung zum Fächer ist vorzugsweise beugungsbegrenzt schmal.

Eine Suche mit einer erfindungsgemässen Vorrichtung liefert als Output ein Intensitätsbild der abgesuchten Umgebung. Die Auswertung des 2-dimensionalen Intensitätsbildes kann entweder nach erfolgtem Scan oder aber auch simultan bzw. zeitnah während der Aufnahme erfolgen. Mögliche Ergebnisse einer solchen Auswertung können beispielsweise
- Intensitätsmaxima allfälliger Zielobjekte,
- ein Zeitpunkt der Zielfindung oder äquivalent auch Winkel zum Zielobjekt oder die
- Distanz zum Zielobjekt sein.

Die Robustheit gegenüber sonnenreflektierenden Oberflächen und spiegelnden Fremdzielen wird erfindungsgemäss verbessert bzw. erst erreicht. Wegen der starken Laserimpulse sind sonnenreflektierende Oberflächen im 2-dimensionalen Intensitätsbild aus zwei Gründen nicht sichtbar. Erstens ist die Laserstrahlung des Senders spektral schmal und gestattet ein vergleichbar schmales Interferenzfilter im Empfangsstrahlengang, das Sonnenlicht wird weitgehend abgeblockt. Zweitens erzeugen die Impulslaser starke Lichtblitze, deren Strahldichte grösser ist als diejenige von Sonnenreflexen. Eine Robustheit gegenüber sonnenreflektierenden Oberflächen wird hierdurch erreicht.

Die erforderliche Robustheit gegenüber Fremd- oder Störzielen ist schwieriger zu erreichen. Zunächst erscheinen im 2-dimensionalen Intensitätsbild neben dem eigentlichen, zu lokalisierenden Zielobjekt oft weitere optisch reflektierende Objekte.

Im Nahbereich unter 10m kann das Problem durch eine besondere biaxiale Anordnung der beiden optischen Fächer gelöst werden. Sender und Empfänger liegen biaxial nebeneinander, wobei der seitliche Versatz senkrecht zu den Fächern gerichtet ist. Die Gesichtsfelder von Sender und Empfänger überlappen dadurch unter 10m nicht. Einfach-reflektierende Objekte, wie z.B. Spiegel, werden in diesem Distanzbereich vom Empfänger nicht gesehen, nur retroreflektierende Zielobjekte mit seitlichem Versatz des gespiegelten Strahls, wie beispielsweise die bei Vermessungsaufgaben gebräuchlichen Tripelprismen, erzeugen ein messbares Empfangssignal. Damit wird die Robustheit unter 10m durch Biaxialität gelöst.

Bei allen anderen Distanzen müssen die richtigen Zielobjekte aus den im 2-dimensionalen Intensitätsbild enthaltenen Objekten erfindungsgemäss identifiziert werden.

Jeder Zieltyp erzeugt sowohl einen charakteristischen Signalverlauf als auch eine charakteristische Ausdehnung als Funktion der Distanz. Zielobjektidentifikation ist daher anhand der beiden distanzabhängigen Messkurven möglich. Bei der gemessenen jeweiligen Objektdistanz wird geprüft, ob Objektausdehnung und Signalstärke im Toleranzband des gesuchten Zielobjekts sind. Je nach konkreten Zielparametern und Messbedingungen genügt es unter Umständen, lediglich einen Vergleich bezüglich nur eines Grenzwertes durchzuführen, z.B. einen Vergleich gegenüber dem unteren Grenzwert bezüglich des Signals und gegenüber dem oberen Grenzwert bezüglich der Objektgrösse.

Wird nun während eines Scans ein reflektierendes Objekt angestrahlt, so werden laufend Signal und Objektausdehnung mit den geladenen Toleranzwerten verglichen. Sobald der Sendefächer ein allfälliges Objekt komplett überstrichen hat und alle Messwerte innerhalb der Toleranzwerte liegen, ist ein Zielobjekt identifiziert und gefunden. Je nach Anwendung wird an dieser Stelle der Suchprozess gestoppt oder es werden lediglich die Koordinaten, wahlweise auch Parameter wie Signal und Ausdehnung, gespeichert und der Suchprozess ohne Scanunterbrechung fortgesetzt, so dass weitere Zielobjekte gesucht und gefunden werden können.

Der durchaus mögliche Fall, dass bei gewissen Fächerstellungen mehrere Zielobjekte in unterschiedlicher Distanz gleichzeitig auftreten, ist aufgrund der Distanzmessung problemlos zu handhaben.

In vielen Anwendungen wird unmittelbar nach der Instrumentenaufstellung als erstes die gesamte Umgebung abgescannt. Hierbei wird ein 2-dimensionales Intensitätsbild erzeugt, welches alle lichtstark reflektierenden Objekte enthält. Die Koordinaten der nicht relevanten Zielobjekte wie Störund Fremdziele werden berechnet und gespeichert. Mit der Kenntnis der Koordinaten aller Störobjekte und Fremdziele können diese von allen weiteren Suchläufen ausgeblendet werden. Damit lässt sich zusätzlich Suchzeit einsparen, da die für die Vermessungsaufgabe nichtrelevanten Objekte sensorisch nicht mehr existieren.

Ist ein Zielobjekt gefunden, so sind Distanz und eine Richtungskoordinate bekannt. Als nächstes wird die zweite Raumrichtung gemessen. Diese wird nach dem bekannten Suchverfahren mit der im Theodoliten vorhandenen automatisierten Zielerfassungseinheit (AZE) realisiert. Der AZE-Such- und Messvorgang ist in diesem Fall sehr effizient und schnell, da nur noch 1-dimensional bewegt bzw. gefahren werden muss. Die Kombination der beiden Vorrichtungen bewirkt einen zusätzlichen Nutzen. Da die AZE die Position des Zielobjekts auf Winkelsekunden genau misst, sind am Ende des AZE-Suchund Messprozess die Zielpunktkoordinaten nicht nur grob, sondern mit geodätischer Genauigkeit im mm-Bereich bis submm-Bereich bekannt.

Die Kombination der erfindungsgemässen Zielsuchvorrichtung mit einer automatisierten Zielerfassungseinheit (AZE) ermöglicht somit die komplette und mm-genaue Bestimmung der 3D-Koordinaten von Zielobjekten.

Eine wesentliche Eigenschaft des erfindungsgemässen Verfahrens bzw. der Vorrichtung ist die Geschwindigkeit des Suchvorgangs. Eine Erschwernis liegt in der grossen, durch den geodätischen Distanzbereich gegebenen Signaldynamik.

Bei der erfindungsgemässen Vorrichtung wird diese Aufgabe durch senderseitige Massnahmen unterstützt bzw. gelöst. Die grosse Signaldynamik kann durch Aussenden mehrerer Laserimpulse unterschiedlicher Intensität abgefangen werden. Die Signaldynamik wird dadurch auf Sender und Empfänger aufgeteilt. Im Kurzdistanzbereich werden vom Empfänger die schwachen Pulse mit kleinerer Amplitude und im Langdistanzbereich die starken Pulse mit hoher Amplitude ausgewertet.

Eine geeignete Verwendung der erfindungsgemässen Vorrichtung stellt die modulare Integration in einem motorisierten Theodolit mit automatischer Zielerfassungseinheit (AZE) gemäss Patent US 6,031,606 dar.

Das erfindungsgemässe Verfahren sowie eine erfindungsgemässe Vorrichtung und ein erfindungsgemässes geodätisches Messgerät werden nachfolgend anhand von in der Zeichnung schematisch dargestellten Ausführungsbeispielen rein beispielhaft näher beschrieben. Im einzelnen zeigen
- Fig.1a-b: die Prinzipdarstellung zweier erfindungsgemässen Realisierungsformen von Verfahren und Vorrichtung mit vertikalem Fächer und einfacher sowie doppelter Impulsmodulation;
- Fig.2: einen Ausschnitt aus einem 2-dimensionalen Intensitätsbild mit Zielobjekt für ein erfindungsgemässes Verfahren;
- Fig.3: die schematische Darstellung der Verwendung eines Plausibilitätsbands (Toleranzwerttabelle) für die Signalamplitude;
- Fig.4: die schematische Darstellung der Verwendung eines Plausibilitätsbands (Toleranzwerttabelle) für die scheinbare Objektgrösse (Objektausdehnung);
- Fig.5a-b: die Darstellung der unterschiedlichen Bedingungen für die Biaxialität von Sendeeinheit und Empfangseinheit zum vorzugsweise beugungsbegrenzten Sendestrahl mit Retroreflektor und mit einfach spiegelndem Objekt;
- Fig.6a-c: die Darstellung von verschiedenen Ausführungsformen der erfindungsgemässen Empfangseinheit mit strukturiertem Fächer, horizontalem Fächerbüschel und zweidimensional-strukturiertem Gesichtsfeld;
- Fig.7a-b: die figürliche Darstellung eines erfindungsgemässen automatisierten geodätischen Messgerätes und die Kombination des Suchvorgangs mit AZE;
- Fig.8: ein Blockschema als Beispiel für eine schaltungsseitige Realisierung der erfindungsgemässen Vorrichtung; und
- Fig.9: die figürliche Darstellung des erfindungsgemässen geodätischen Vermessungssystems.

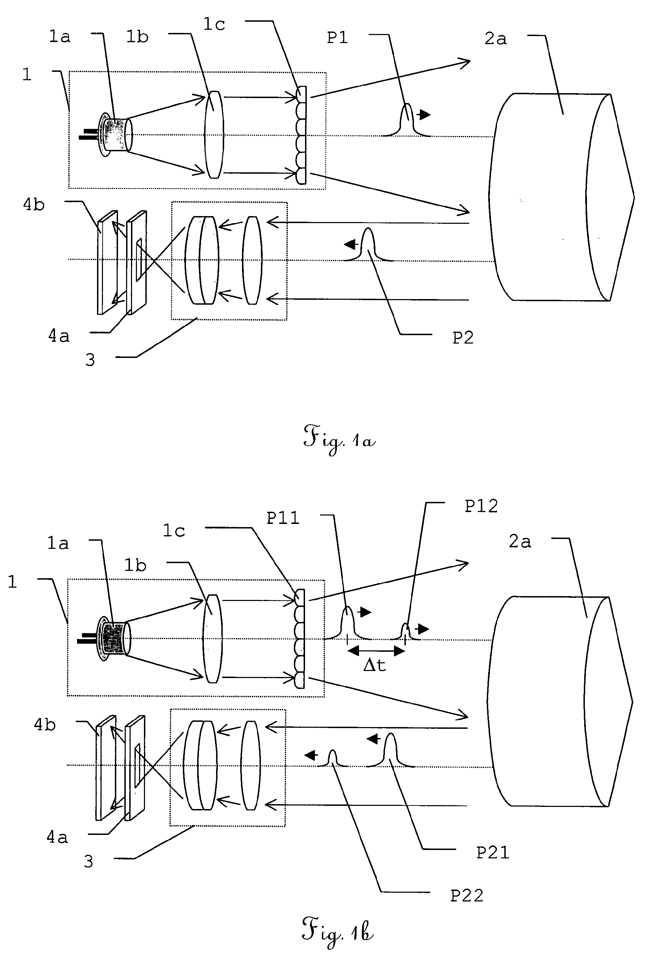

Fig.1a-b zeigt zwei mögliche Realisierungsformen einer erfindungsgemässen Vorrichtung zur Durchführung des erfindungsgemässen Verfahrens.

In Fig.1a wird durch eine in der Sendeeinheit 1 angeordnete Pulslaserdiode 1a als Sendediode mit Impulsmodulation elektromagnetische Strahlung mit Pulsen P1 als Signal erzeugt. Eine geeignete Pulsdauer beträgt beispielsweise 50 Nanosekunden. Die hierdurch erzeugten starken Signale mit optischen Leistungen im Watt-Bereich sind robust gegen Fremdlichtreflexe. Sogar sonnenbeschienene spiegelnde Oberflächen sind dadurch schwächer als der empfangene Signalimpuls.

Die erzeugte Strahlung wird in einem senkrecht orientierten Fächer emittiert, der vorrichtungsseitig durch eine Kombination aus einer Linse 1b und einem Zylinderlinsenarray 1c erzeugt wird. Alternativ können jedoch auch andere geeignete Komponenten verwendet werden, wie z.B. Mikrolinsenarrays oder diffraktive optische Elemente. Nach der Emission und einer Reflexion an einer Zielmarke, die beispielsweise einen Retroreflektor 2a als ein Beispiel für einen geeigneten Reflektor aufweist, wird der reflektierte Puls P2 wieder von der Vorrichtung empfangen.

Dabei wird empfängerseitig das fächerartige Gesichtsfeld durch eine Schlitzblende 4a vor einer Empfangsdiode als photosensitivem Element 4b zusammen mit einem Objektiv 3 mit zylindrischer Wirkung realisiert.

In der in Fig.1b dargestellten zweiten Realisierungsform werden vorrichtungsseitig in der Sendeeinheit 1 die gleichen Komponenten Pulslaserdiode 1a, Linse 1b und Zylinderlinsenarray 1c verwendet. Allerdings werden jetzt als Beispiel zwei Laserimpulse mit unterschiedlicher Intensität gesendet. Auch hier ist die Pulsrate im kHz-Bereich. Die emittierte Strahlung weist nun einen Puls P11 mit grösserer und einen Puls P12 mit niedrigerer maximaler Pulshöhe auf, die zeitlich aufeinanderfolgen und somit in dieser Realisierungsform einen Doppelpuls darstellen.

Nach einer Reflektion an der Zielmarke, die wiederum einen Retroreflektor 2a aufweist, werden die reflektierten Pulse P21 und P22 von der Empfangseinheit erfasst. Diese besteht wiederum aus einem Objektiv 3 mit zylindrischer Wirkung und einer Schlitzblende 4a vor einer Empfangsdiode als photosensitivem Element 4b.

Beim Empfang der Impulse unterschiedlicher Intensität wird derjenige ausgewertet, welcher im Empfangsdynamikbereich des Empfängers liegt. In diesem Beispiel wird für eine kürzere Messdistanz, deren Grenze beispielsweise bei 20 m liegen kann, der reflektierte Puls P22 mit niedriger Pulshöhe und für eine grössere Messdistanz der reflektierte Puls P21 mit grösserer Pulshöhe verwendet.

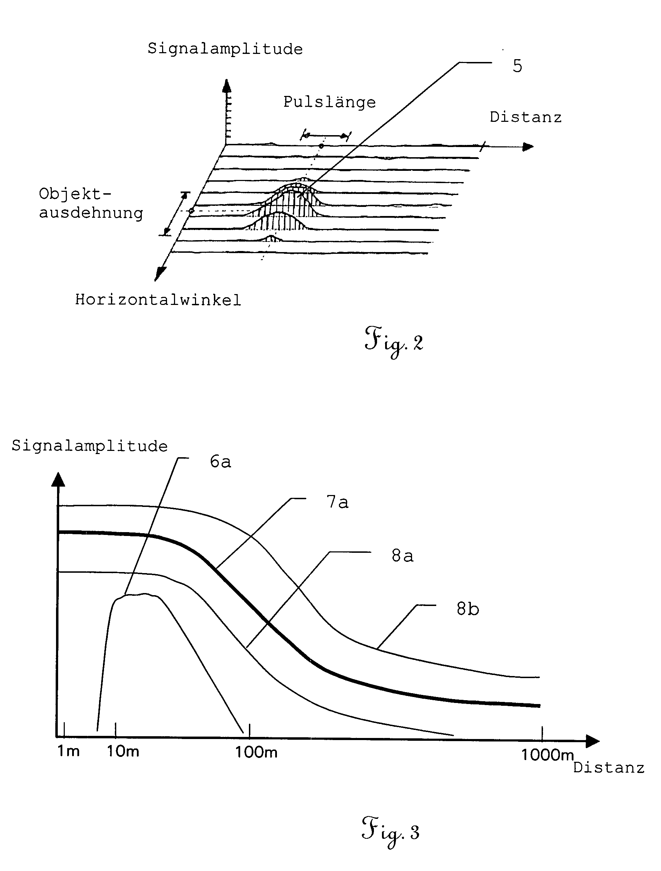

In Fig.2 ist schematisch ein Ausschnitt aus einem zweidimensionalen Intensitätsbild mit Zielobjekt dargestellt. Die einzelnen, vom Empfänger detektierten Signalimpulse 5 werden in Abhängigkeit vom Zeitpunkt ihrer Emission mit zeitlich aufgelöster Abtastung erfasst. Bei jedem Laserimpuls entsteht im Intensitätsbild eine weitere Signalspur längs der Distanzachse. Mit der zeitlich aufgelösten Abtastung erfolgt eine Zuordnung hinsichtlich der Distanz, und die Emissionszeitpunkte legen den zur Signalspur gehörigen Horizontalwinkel fest.

Im zweidimensionalen Intensitätsbild können nun durch eine Analyse des erfassten Verlaufs der Signalstärken Objekte identifiziert und deren Objektausdehnung und Distanz gemessen werden. Durch eine Plausibilitätsprüfung erfolgt eine Differenzierung von Zielmarke und Fremdziel oder Störeinfluss.

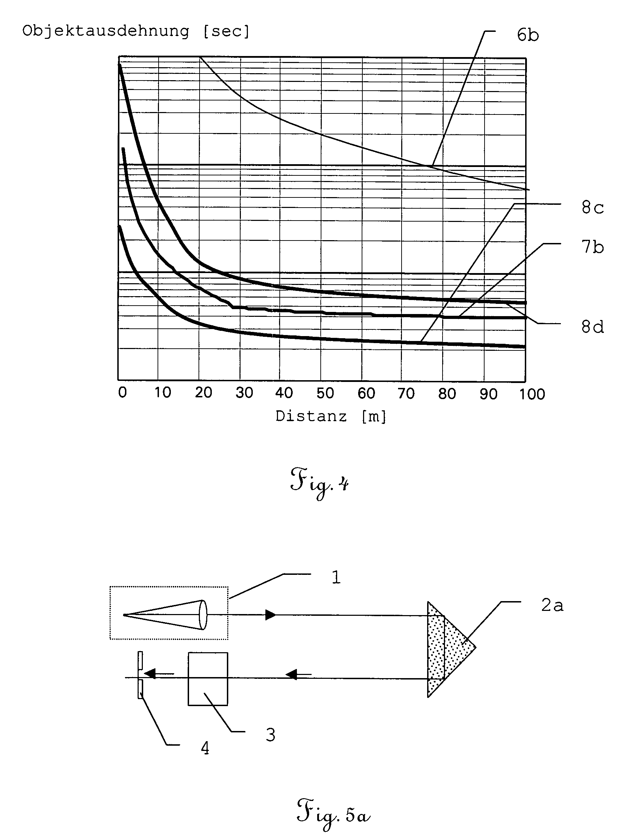

Die Fig.3 und Fig.4 zeigen schematisch die Durchführung einer solchen Plausibilitätsprüfung zur Erkennung von Zielmarken. Die Basis der Plausibilitätsprüfung bilden das Signal-Distanz-Modell und das Objektbreite-Distanz-Modell (Toleranzwerttabellen). Die Objektbreite oder Objektausdehnung wird anhand des Produktes aus Pulszahl und Winkelgeschwindigkeit berechnet. Zusätzlich ist eine Berücksichtigung bzw. Berechnung des Reflexionsgrads des Zielobjekts möglich.

Die Objektausdehnung ist ein wichtiges Erkennungsmerkmal, da Verkehrschilder durchwegs, im Vergleich zu den eigentlichen Zielmarken, grosse Reflexionsfläche aufweisen. Für diese objektspezifischen Merkmale kann pro Zieltyp eine eigene, spezifische Toleranzwerttabelle geführt werden. Dabei können auch frei wählbare Toleranzwerttabelle für besondere, nutzerspezifische Zieltypen eingesetzt werden. Auch können alternative oder ergänzende Plausibilitätsprüfungen anhand anderer Kriterien durchgeführt werden. Beispielsweise können gegebenenfalls spektral unterschiedliche Reflexionsvermögen verschiedener Objekte analysiert werden.

Fig.3 zeigt ein Beispiel für eine Plausibilitätsprüfung hinsichtlich der Signalamplitude unter Verwendung eines Plausibilitätsbandes (Toleranzwerttabelle). Die Plausibilitätsprüfung erfolgt, indem geprüft wird, ob ein gemessener Wert einer Zielmarke innerhalb eines Plausibilitätsbandes liegt, das durch jeweils eine untere Toleranzgrenze 8a und eine obere Toleranzgrenze 8b definiert wird. Die theoretische Kurve aller Werte einer Zielmarke wird durch das entfernungsabhängige Profil 7a dargestellt. Beispielsweise würde ein Wert für ein Fremdziel auf dessen Profil, wie z.b. dem Profil 6a eines Verkehrsschildes, und damit ausserhalb des Plausibilitätsbandes liegen und somit als Fremdziel identifiziert werden.

Je nach konkreter Situation, wie z.B. der Charakteristik der Zielmarken und der möglichen Fremdziele, kann es hinreichend sein, lediglich mit einer Toleranzgrenze zu arbeiten, wenn diese eine sichere Trennung von Zielmarke und Fremdzielen garantiert.

Ein anderes Verfahren zur Plausibilitätsprüfung hinsichtlich der scheinbaren Objektgrösse, wiederum unter Verwendung eines Plausibilitätsbandes (Toleranzwerttabelle), ist in Fig.4 dargestellt. Dargestellt ist eine Toleranzwerttabelle, welche die scheinbare Objektbreite in Zeiteinheiten mit logarithmischer Skala bei einem horizontalen Scan des Messgerätes für die unterschiedlichen Entfernungen beinhaltet, in denen ein Ziel aufgefunden werden kann. Eine gemessene scheinbare Ausdehnung für eine Zielmarke, für die wiederum das theoretische Profil 7b dargestellt ist, gibt deren scheinbare Ausdehnung in der Horizontalen wider. Auch hier erfolgt eine Prüfung, ob der gemessene Wert innerhalb des durch die untere Toleranzgrenze 8c und die obere Toleranzgrenze 8d definierten Plausibilitätsbandes liegt. Ein Wert für ein Fremdziel würde beispielsweise auf oder in der Nähe dessen theoretischen Profils 6b und damit ausserhalb des Plausibilitätsbandes liegen.

Die Fig.5a-b zeigen die Verhältnisse bei der Reflektion der emittierten Pulse an einem Retroreflektor im Vergleich zur Reflektion an einem Fremdziel für den Nahbereich.

In Fig.5a wird schematisch die Reflektion an einem Retroreflektor 2a im Nahbereich dargestellt. Die Gesichtsfelder von Sendeeinheit 1 und Empfangseinheit, welche Objektiv 3 und Detektor 4 aufweist, sind biaxial angeordnet, sodass diese im Nahbereich unter 5m nicht überlappen und dadurch robust gegen Fremdobjekte ohne Retroreflektion sind. Die von der Sendeeinheit 1 emittierte Strahlung wird vom Retroreflektor 2a parallel versetzt reflektiert und kann somit in der durch Objektiv 3 und Detektor 4 definierten Achse der Empfangseinheit aufgenommen werden.

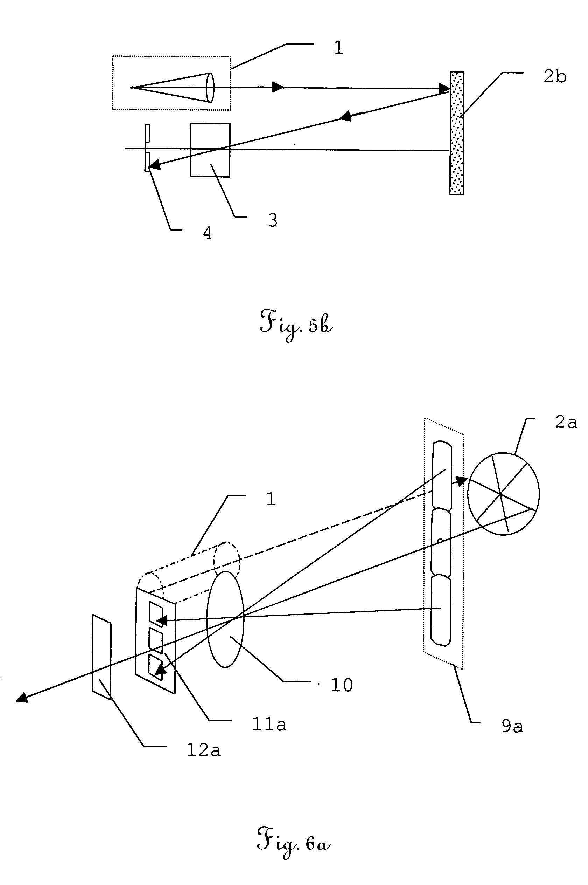

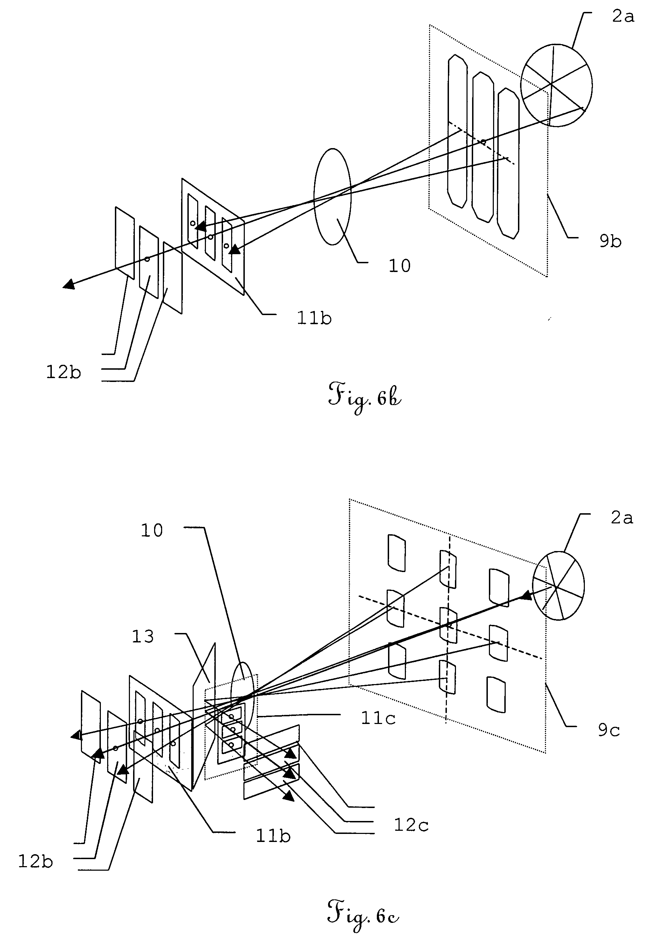

Die hiervon abweichende Situation bei der Reflektion an einem Fremdziel 2b ist in Fig.5b dargestellt. Das Fremdziel führt zu keinem parallelen Versatz der von der Sendeeinheit 1 emittierten Strahlung, so dass diese nicht in der durch Objektiv 3 und Detektor 4 definierten Achse aufgenommen werden kann. Eine biaxiale Anordnung der Gesichtsfelder von Sendeeinheit 1 und Empfangseinheit ermöglicht somit die Unterdrückung einer Erfassung von Fremdzielen für den Nahbereich.

Um die Suchzeit zusätzlich zu verkürzen, sind auf Empfängerseite mehrere Realisierungsformen möglich. Das fächerförmige Gesichtsfeld kann in mehrere Sektoren unterteilt werden, alternativ können aber auch mehrere Fächer nebeneinander verwendet werden. Die Fig.6a-c zeigen dementsprechend alternative Ausführungsformen einer erfindungsgemässen Empfangseinheit mit strukturiertem Fächer, horizontalem Fächerbüschel und zweidimensional-strukturiertem Gesichtsfeld. In allen Beispielen wird empfangsseitig der Sensorfächer in Segmente aufgeteilt. Dadurch wird eine grobe räumliche Positionsbestimmung auch in Fächerrichtung möglich.

Fig.6a zeigt die Strukturierung des Fächers der Empfangseinheit. Die von der Sendeeinheit 1 emittierte und von einem Retroreflektor 2a reflektierte Strahlung wird nun durch eine Unterteilung des Empfangsfächers mit zusätzlicher Ortsinformation empfangen. Diese Unterteilung des Fächers 9a in mehrere Sektoren lässt sich durch eine Schlitzblende 11a im ersten Brennpunkt der anamorphotischen Empfängeroptik realisieren. Bei der in Fig. 6a dargestellten Ausführungsform kann eine schaltbare Schlitzblende eingesetzt werden, bei der wahlweise die Transmission des relevanten Schlitzes verändert werden kann. Das photosensitive Element 12a ist im Bereich der zweiten Brennebene plaziert, um das Gesichtsfeld der Empfangsoptik 10 in die Raumrichtung senkrecht zum Fächer mit hoher Transmission abzudecken. Durch die Schlitzblende 11a wird der Empfangsfächer in beispielsweise 3 Sektoren unterteilt, was eine grobe Positionsmessung auch in vertikaler Richtung ermöglicht. Die vom Retroreflektor 2a kommende Strahlung passiert im dargestellten Beispiel die mittlere Öffnung der Schlitzblende 11a, so dass eine Grobschätzung des Winkelbereichs in vertikaler Richtung erfolgen kann.

Eine andere Ausführungsform der erfindungsgemässen Empfangseinheit mit mehreren Fächern zeigt Fig.6b. Die Erzeugung mehrerer, nebeneinander angeordneter Empfangsfächer als Fächerbüschel 9b erfolgt durch die Verwendung einer strukturierten photosensitiven Empfangsfläche 12b in der zweiten Brennebene, insbesondere in Zusammenhang mit einer in gleicher Anordnung strukturierten Schlitzblende 11b. Diese Unterteilung der photosensitiven Empfangsfläche 12b, z.B. in einen linearen Array von Photodetektoren, erzeugt dabei den Büschel nebeneinander liegender Suchfächer. Als Beispiel sind hier 3 Fächer dargestellt, eine andere Fächerzahl lässt sich durch die Wahl einer geeigneten Unterteilung bewirken. So sind insbesondere auch Büschel mit zwei oder vier Fächern realisierbar. Der mittlere Fächer dieses Beispiels, welcher parallel zur Sendeachse liegt, reagiert auf den Retroreflektor 2a, der zur Sendeachse hin geneigte Fächer reagiert auf Objekte mit Einfachspiegelung, der dritte Fächer lediglich auf Sonnenreflexe. Eine strukturierte photosensitive Empfangsfläche 12b erhöht daher die Sicherheit bezüglich korrekter Identifikation reflektierender Objekte.

Eine erfindungsgemässe Empfangseinheit mit zweidimensionaler Strukturierung des Gesichtsfeldes ist in Fig.6c dargestellt. Durch die Kombination zweier strukturierter PIN-Diode, deren Strukturierungsausrichtung im rechten Winkel zueinander orientiert ist, kann das Gesichtfeld zweidimensional unterteilt werden. Die von der Empfangsoptik 10 mit ihrem Gesichtsfeld erfasste Strahlung wird über einen Strahlteiler 13 auf zwei unterschiedliche Detektoren geleitet. Der erste Detektor besteht aus einer vertikal strukturierten photosensitiven Empfangsfläche 12b und einer entsprechenden Schlitzblende 11b in der zweiten Brennebene. Der zweite Detektor besteht aus einer horizontal strukturierten photosensitiven Empfangsfläche 12c mit dazugehöriger Schlitzblende 11c in der ersten Brennebene. Durch diese senkrecht zueinender orientierte Strukturierung wird das Gesichtsfeld horizontal und vertikal unterteilt, so dass hieraus ein Büschel von jeweils wiederum strukturierten Fächern resultiert. In diesem Beispiel mit zwei nebeneinander liegenden PIN-Dioden wird dadurch Retroreflektion und gewöhnliche Spiegelreflektion mit zusätzlicher Richtungsinformation empfang- und damit unterscheidbar.

Als die beschriebenen photosensitiven Elemente 12a bzw. Empfangsflächen 12b und 12c können alle geeigneten Formen von ortssensitiven Detektoren wie z.B. Empfangsdioden bzw. Empfangsdiodenarrays oder PSD verwendet werden.

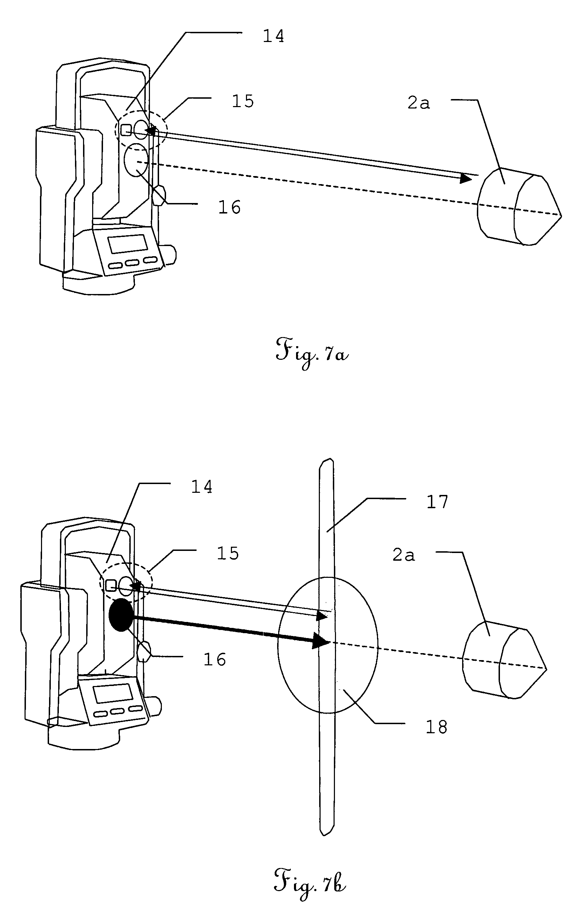

In Fig.7a-b wird die Kombination einer erfindungsgemässen Vorrichtung 15 mit einem AZE-System 16 zusammen mit dem schematischen Ablauf des Verfahrens dargestellt.

Fig.7a zeigt die bauliche Integration einer erfindungsgemässen Vorrichtung 15 und eines AZE-Systems in ein geodätisches Messgerät 14. Dabei ergänzt die erfindungsgemässe Vorrichtung 15 das beispielsweise in einem Theodolit als geodätischem Messgerät 14 schon vorhandene AZE-System 16. Die Emission zur Erkennung eines Retroreflektors 2a als Zielmarke durch erfindungsgemässe Vorrichtung 15 und AZE-System 16 erfolgt in diesem Beispiel im wesentlichen parallel zueinander.

In Fig.7b wird die Kombination der beiden Suchvorgänge schematisch gezeigt. Durch die erfindungsgemässe Vorrichtung 15 erfolgt ein schneller Umgebungsscan mit einem vertikalen Fächer 17 zur Bestimmung des Horizontalwinkels einer Zielmarke. In kurzer Zeit (wenigen Sekunden) ist ein Retroreflektor 2a als Zielmarke gefunden und deren Lage grob bestimmt. Die Messdaten der erfindungsgemässen Vorrichtung 15 können zwecks Unterstützung an andere Sensoren im geodätischen Messgerät 14 weitergeleitet werden, so beispielsweise an ein AZE-System 16. Dieses AZE-System 16 sucht danach mit seinem Fächer 18 ebenfalls den Retroreflektor 2a und bestimmt damit auch den Vertikalwinkel. Erfolgt eine Kanaltrennung zu anderen optischen Sensoren mittels geeigneter optischer Trägerwellenlängen, kann ein simultaner Einsatz mehrerer Sensoren im geodätischen Messgerät oder auch mehrerer geodätischer Messgeräte erfolgen.

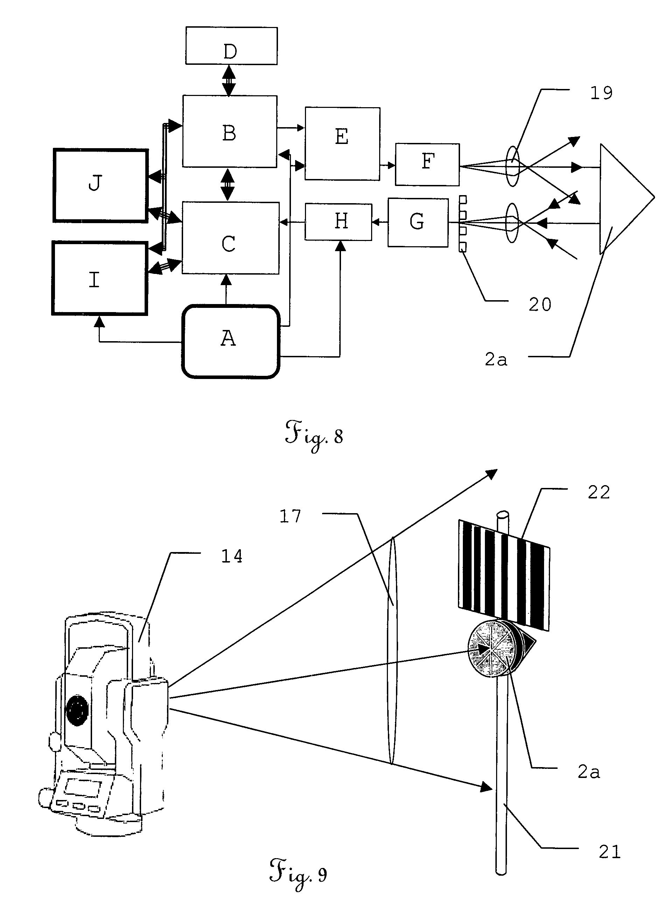

Fig.8 zeigt ein Blockschema für eine erfindungsgemässe Vorrichtung. Als gemeinsame Zeitbasis dient eine Systemuhr A, die mit dem Bildspeicher I, der elektronischen Auswerteeinheit C, der Steuer- und Signalverarbeitungseinheit B, dem Analog-Digital-Wandler H und dem Laser-Treiber und Controller E verbunden ist. Der Laser F emittiert Strahlung, die über eine strahlformende Optik 19 auf einen Retroreflektor gesandt wird. Nach der erfolgten Reflektion wird diese Strahlung empfangen und über eine bildformende Maske 20 auf den Detektor G geleitet. Das Signal dieses Detektors G wird von dem Analog-Digital-Wandler H konvertiert und in der elektronischen Auswerteeinheit C weiterverarbeitet. Diese steht in Verbindung mit der Steuer- und Signalverarbeitungseinheit B, dem Bildspeicher I und den Toleranzwerttabellen J für alle möglichen Zieltypen. Über eine Schnittstelle besteht die Möglichkeit einer Verbindung zu einem anderen System D, z.B. einem geodätischen Messgerät oder der Auswerteeinheit einer Drehvorrichtung.

In Fig.9 wird ein erfindungsgemässes geodätisches Vermessungssystem mit einer automatischen Zielerkennung anhand eines Barcode-Musters an der Zielmarke beschrieben. An einem Lotstock 21 einer Zielmarke ist neben der Zielpunktmarkierung, die hier exemplarisch als Retroreflektor 2a ausgebildet ist, zusätzlich eine codierte Zieltafel 22 angebracht. Die Codierung besteht aus optisch stark reflektierenden Streifen, welche bei einem Suchlauf sequentiell gescannt werden. Durch den vertikalen Fächer 17 wird ein ausreichend grosser vertikaler Winkel überstrichen, so dass eine parallele Ausleuchtung bzw. Erfassung von Zieltafel 22 und Retroreflektor 2a möglich ist. Das vom Suchsensor empfangene Signal ist zeitlich amplitudenmoduliert, der Code der Zieltafel wird dabei in eine zeitliche Abfolge transformiert. Als Ergebnis ist dadurch eine sehr rasche Zielsuche und Identifikation der Zielmarke möglich. Mittels einer Koordinaten-Datenbank lassen sich bestimmte Zielmarken, aber auch störende Gegenstände ausblenden. Solche Punkte werden nicht angefahren. In der Auswertung des entsprechenden Datenbildes steht neben der Objektdistanz und Objektgrösse auch die codierte Information der Zieltafel.

Es versteht sich, dass die dargestellten Figuren eine von vielen Ausführungsformen darstellen und der Fachmann alternative Realisierungsformen, z.B. unter Verwendung anderer Mittel zur Emission und zum Empfang elektromagnetischer Strahlung oder zur Signalaufnahme oder Signalverarbeitung, ableiten kann.

## Patentansprüche

1. Verfahren zum automatischen Auffinden von wenigstens einer Zielmarke mit einer Vorrichtung
mit einer ersten Sendeeinheit (1),
mit einer ersten Empfangseinheit und
mit einer Auswerteeinheit,
wobei
• die erste Sendeeinheit (1) zur Beleuchtung der Zielmarke elektromagnetische Strahlung, vorzugsweise mit einer ersten Trägerwellenlänge, in Form eines über einen horizontalen Winkelbereich bewegbaren, insbesondere vertikalen, Sendefächers (17) emittiert, wobei dieser vorzugsweise über einen Vollkreis rotierbar ist;
• die erste Empfangseinheit innerhalb eines, vorzugsweise vertikalen, fächerförmigen Erfassungsbereichs von der Zielmarke reflektierte Signale (P2) empfängt, insbesondere mit einem ortsauflösenden optoelektronischen Detektor (4);
• die Auswerteeinheit die Position der Zielmarke, zumindest deren Horizontalwinkel, bestimmt,
**dadurch gekennzeichnet, dass**
die von der ersten Sendeeinheit (1) ausgesandte elektromagnetische Strahlung eine erste Modulation, insbesondere Impulsmodulation, erfährt, vorzugsweise mit einer ersten Impulsrate zwischen 10 und 50 kHz, und
die erste Empfangseinheit die von der Zielmarke reflektierten Signale (P2) in Zeitabhängigkeit erfasst, vorzugsweise unter Zuordnung einer mit dem Signal verbundenen Laufzeit zu einer Distanz, und gegebenenfalls speichert.

2. Verfahren nach Anspruch 1,
**dadurch gekennzeichnet, dass**
die erste Sendeeinheit (1) die elektromagnetische Strahlung in einem Sendefächer mit einem Öffnungswinkel zwischen 10° und 90° und/oder mit einer senkrecht zum Sendefächer beugungsbegrenzten Divergenz emittiert.

3. Verfahren nach einem der vorangehenden Ansprüche,
**dadurch gekennzeichnet, dass**
die erste Empfangseinheit die empfangenen Signale mit jeweils einer Zeitmarke und/oder jeweils einer Distanz verknüpft erfasst, und gegebenenfalls in einer zweidimensionalen Datenstruktur, insbesondere mit Distanz und Winkel als Indexvariablen, speichert.

4. Verfahren nach Anspruch 3,
**dadurch gekennzeichnet, dass**
die erste Auswerteeinheit aus den erfassten und/oder gespeicherten Signalen (5) scheinbare Objektausdehnungen ermittelt und mit für die zu findende Zielmarke charakteristischen Parametern vergleicht.

5. Verfahren nach Anspruch 4,
**dadurch gekennzeichnet, dass**
die Auswerteeinheit eine Plausibilitätsprüfung für die erfassten und/oder gespeicherten Signale (5) der scheinbaren Objektausdehnung durchführt, vorzugsweise durch Vergleich mit einer, insbesondere distanzabhängigen, Toleranzwerttabelle für Signalamplitude und/oder scheinbare Objektausdehnung.

6. Verfahren nach einem der vorangehenden Ansprüche,
**dadurch gekennzeichnet, dass**
die elektromagnetische Strahlung wenigstens eine zweite Impulsmodulation mit der ersten Impulsrate, aber mit einer gegenüber der ersten Impulsmodulation verringerten Amplitude erfährt, so dass wenigstens eine Folge von Doppelimpulsen (P11, P12) mit differierender Amplitude entsteht.

7. Verfahren nach Anspruch 6,
**dadurch gekennzeichnet, dass**
von den Doppelimpulsen (P11, P12), insbesondere in Abhängigkeit von der Entfernung zur Zielmarke, nur jeweils zu einer der beiden Impulsmodulationen gehörige Signale erfasst und/oder ausgewertet werden.

8. Verfahren nach einem der vorangehenden Ansprüche,
**dadurch gekennzeichnet, dass**
die erste Empfangseinheit und/oder die Auswerteeinheit bereits identifizierte Störobjekte und/oder bereits identifizierte Fremdziele ausblenden und/oder unterdrücken.

9. Verfahren nach einem der vorangehenden Ansprüche,
**dadurch gekennzeichnet, dass**
die erste Empfangseinheit die Signale (P2, P21, P22) mit einer zusätzlichen Ortsinformation erfasst, vorzugsweise mittels einer horizontalen und/oder vertikalen Unterteilung des fächerförmigen Erfassungsbereichs, und/oder mittels einer weiteren Einrichtung, insbesondere einer automatischen Zielerfassungseinheit (16), in einem zusätzlichen Schritt eine Bestimmung des Vertikalwinkels der Zielmarke erfolgt.

10. Verfahren nach einem der vorangehenden Ansprüche,
**dadurch gekennzeichnet, dass**
die erste Sendeeinheit (1) oder eine weitere Sendeeinheit zusätzlich elektromagnetische Strahlung mit einer zweiten Trägerwellenlänge emittiert und dass gegebenenfalls eine weitere Empfangseinheit die von der Zielmarke reflektierten Signale erfasst.

11. Verfahren nach Anspruch 10,
**dadurch gekennzeichnet, dass**
die Auswerteeinheit die Position der Zielmarke unter Verwendung der Signale der zweiten Trägerwellenlänge, insbesondere für eine Plausibilitätsprüfung, bestimmt.

12. Vorrichtung zum automatischen Auffinden der Position von wenigstens einer Zielmarke, vorzugsweise zur Verwendung in Verbindung mit einem Theodoliten,
mit einer Sendeeinheit (1), insbesondere mit einer Pulslaserdiode (1a), zur Beleuchtung der Zielmarke mit elektromagnetischer Strahlung in Form eines über einen horizontalen Winkelbereich bewegbaren, insbesondere vertikalen, Sendefächers (17), wobei dieser vorzugsweise über einen Vollkreis rotierbar ist;
mit einer, vorzugsweise biaxial zur Sendeeinheit angeordneten, Empfangseinheit mit einem optoelektronischen, insbesondere ortsauflösenden, Detektor (4) zur Erfassung eines von der Zielmarke reflektierten Signals (P2), wobei das Signal (P2) vom Detektor (4) innerhalb eines, vorzugsweise vertikalen, fächerförmigen Erfassungsbereichs erfasst wird, wobei der Erfassungsbereich über einen horizontalen Winkelbereich bewegbar, vorzugsweise über einen Vollkreis rotierbar, ist; und
mit einer Auswerteeinheit zur Bestimmung der Position der Zielmarke aus den Signalen (P2),
**dadurch gekennzeichnet, dass**
die elektromagnetische Strahlung eine erste Modulation, insbesondere eine Impulsmodulation, vorzugsweise mit einer ersten Impulsrate zwischen 10 und 50 kHz, aufweist und
die Empfangseinheit einen Zeitmesser, insbesondere zur Bestimmung der Laufzeit von der Zielmarke reflektierten Signale (P2) eines Impulses der elektromagnetischen Strahlung, aufweist,
wobei die Empfangseinheit gegebenenfalls einen Speicher (J) zur Speicherung der Signale (P2) aufweist

13. Vorrichtung nach Anspruch 12,
**dadurch gekennzeichnet, dass**
der, vorzugsweise variable, Öffnungswinkel des Sendefächers (17) der Sendeeinheit (1) zwischen 10° und 90° beträgt und/oder die Divergenz der Strahlung senkrecht zum Sendefächer (17) beugungsbegrenzt ist.

14. Vorrichtung nach einem der Ansprüche 12 oder 13,
**dadurch gekennzeichnet, dass**
die Sendeeinheit (1) wenigstens eines der folgenden Mittel zur Erzeugung der Form des Sendefächers (17) aufweist
- Zylinderlinse (1c),
- Mikrolinsenarray,
- diffraktives optisches Element.

15. Vorrichtung nach einem der Ansprüche 12 bis 14,
**dadurch gekennzeichnet, dass**
die elektromagnetische Strahlung wenigstens eine zweite Impulsmodulation mit der ersten Impulsrate, aber einer gegenüber der ersten Impulsmodulation verringerten Amplitude aufweist, so dass wenigstens eine Folge von Doppelimpulsen (P11, P12) mit differierender Amplitude entsteht.

16. Vorrichtung nach einem der Ansprüche 12 bis 15,
**dadurch gekennzeichnet, dass**
die Auswerteeinheit eine Vorrichtung für Plausibilitätsprüfungen einer Zielmarke aufweist, vorzugsweise durch Vergleich mit einer, insbesondere distanzabhängigen, Toleranzwerttabelle für Signalstärke und/oder Objektgrösse.

17. Vorrichtung nach einem der Ansprüche 12 bis 16,
**dadurch gekennzeichnet, dass**
die Empfangseinheit und/oder die Auswerteeinheit eine Einrichtung zur Ausblendung und/oder Unterdrückung von Störobjekten und/oder Fremdzielen aufweist.

18. Vorrichtung nach einem der Ansprüche 12 bis 17,
**dadurch gekennzeichnet, dass**
die Empfangseinheit wenigstens eines der folgenden Mittel zur Erzeugung eines fächerförmigen Erfassungsbereichs aufweist
- Zylinderlinse,
- Mikrolinsenarray mit zylindrischer Wirkung,
- Diffraktives optisches Element.

19. Vorrichtung nach einem der Ansprüche 12 bis 18,
**dadurch gekennzeichnet, dass**
der Detektor eines der folgenden Mittel zur Unterteilung des Erfassungsbereichs in Sektoren aufweist
- eine Blende (4a, 11a) mit einem photosensitiven Element (4b, 12, 12a);
- eine strukturierte, photosensitive Empfangsfläche (12b), insbesondere mit einem linearen Array aus photosensitiven Elementen und einer Blende (11b);
- zwei strukturierte, photosensitive Empfangsflächen (12b, 12c), insbesondere mit einem Strahlteiler (13) und zwei linearen Arrays aus photosensitiven Elementen, wobei ein Array durch eine Blende (11c) horizontal und ein Array durch eine Blende (11b) vertikal strukturiert ist;
- wobei die Blenden (4a, 11a, 11b, 11c) entweder als Schlitzblenden, vorzugsweise als bewegliche Schlitzblenden, und/oder als Blenden mit schaltbarer Transmission ausgebildet sind.

20. Empfangseinheit, zur Erfassung und Speicherung eines von einer Zielmarke reflektierten Signals (P2),
mit einem optoelektronischen, insbesondere ortsauflösenden, Detektor (4),
wobei der Erfassungsbereich der Empfangseinheit fächerförmig mit vertikaler Ebene ausgebildet ist;
mit einem Zeitmesser, insbesondere zur Bestimmung der Laufzeit von der Zielmarke reflektierten Signale (P2) der elektromagnetischen Strahlung,
**gekennzeichnet durch**
einen Speicher (J) zur Speicherung der empfangenen Signale.

21. Empfangseinheit nach Anspruch 20,
**gekennzeichnet durch**
wenigstens eines der folgenden Mittel zur Erzeugung eines fächerförmigen Erfassungsbereichs
- Zylinderlinse,
- Mikrolinsenarray mit zylindrischer Wirkung,
- Diffraktives optisches Element.

22. Empfangseinheit nach Anspruch 20 oder 21,
**gekennzeichnet durch**
eine Einrichtung zur Ausblendung und/oder Unterdrückung von Störobjekten und/oder Fremdzielen.

23. Empfangseinheit nach einem der Ansprüche 20 bis 22,
**dadurch gekennzeichnet, dass**
der Detektor (4) eines der folgenden Mittel zur Unterteilung des Erfassungsbereichs in Sektoren aufweist
- eine Blende (4a, 11a) mit einem photosensitiven Element (4b, 12, 12a);
- eine strukturierte, photosensitive Empfangsfläche (12b), insbesondere mit einem linearen Array aus photosensitiven Elementen und einer Blende (11b);
- zwei strukturierte, photosensitive Empfangsflächen (12b, 12c), insbesondere mit einem Strahlteiler (13) und zwei linearen Arrays aus photosensitiven Elementen, wobei ein Array durch eine Blende (11c) horizontal und ein Array durch eine Blende vertikal (11b) strukturiert ist;
- wobei die Blenden (4a, 11a, 11b, 11c) entweder als Schlitzblenden, vorzugsweise als bewegliche Schlitzblenden, und/oder als Blenden mit schaltbarer Transmission ausgebildet sind.

24. Geodätisches Messgerät (14), insbesondere Theodolit oder Nivellier, mit einer Vorrichtung zum automatischen Auffinden von wenigstens einer Zielmarke nach einem der Ansprüche von 12 bis 19, wobei die elektromagnetische Strahlung eine erste Trägerwellenlänge aufweist.

25. Geodätisches Messgerät (14) nach Anspruch 24,
**gekennzeichnet durch**
eine automatische Zielsuchvorrichtung (16), insbesondere mit einem Sender zur Emission von elektromagnetischer Strahlung mit einer zweiten Trägerwellenlänge.

26. Geodätisches Vermessungssystem zur Verwendung mit einem Verfahren nach einem der Ansprüche 1 bis 11,
mit wenigstens einem geodätischen Messgerät (14) nach einem der Ansprüche 24 oder 25 und
mit wenigstens einer Zielmarke, die wenigstens einen Reflektor (2a) und wenigstens einen eindimensionalen Strichcode (22) aufweist, wobei dessen Striche parallel zum Sendefächer (17) und/oder parallel zum fächerartigen Erfassungsbereich orientiert sind.

27. Geodätisches Vermessungssystem zur Verwendung mit
einem Verfahren nach einem der Ansprüche 10 oder 11,
mit wenigstens einem geodätischen Messgerät (14) nach Anspruch 25 und
mit wenigstens einer Zielmarke, die wenigstens einen Reflektor (2a) aufweist,
wobei das Reflexionsvermögen des Reflektors (2a) bezüglich der ersten und zweiten Trägerwellenlänge so abgestimmt ist, dass das Verhältnis der reflektierten Intensität von erster und zweiter Trägerwellenlänge eine Erkennung des Reflektors (2a) ermöglicht.
